# EUROPÄISCHE PATENTSCHRIFT

(11) **EP 3 658 318 B1**
(45) Veröffentlichungstag und Bekanntmachung des Hinweises auf die Patenterteilung: **17.01.2024**
(21) Anmeldenummer: 18746926.7
(22) Anmeldetag: 27.07.2018
(51) Int. Cl.: B23B 29/034, F16B 39/02

(54) **ZERSPANUNGSWERKZEUG MIT EINER JUSTIEREINRICHTUNG**
CUTTING TOOL HAVING AN ADJUSTING DEVICE
OUTIL D'USINAGE PAR ENLÈVEMENT DE COPEAUX PRÉSENTANT UN DISPOSITIF D'AJUSTEMENT

(30) Priorität: 28.07.2017 DE 102017213047
(43) Veröffentlichungstag der Anmeldung: 03.06.2020
(73) Patentinhaber: Gühring KG, 72458 Albstadt (DE)
(72) Erfinder: HECKEL, Gerd, 90617 Puschendorf (DE); HOLLFELDER, Hans-Peter, 90768 Fürth (DE); THANNER, Jürgen, 91161 Hilpoltstein (DE)
(74) Vertreter: Winter, Brandl - Partnerschaft mbB
(86) Internationale Anmeldenummer: PCT/EP2018/070396
(87) Internationale Veröffentlichungsnummer: WO 2019/020783

(56) Entgegenhaltungen:
- EP-A1- 0 478 239
- DE-A1- 4 022 579
- DE-B1- 2 167 082
- DE-U1-202013 006 947
- US-A- 2 274 244

## Beschreibung

Die Erfindung betrifft ein Zerspanungswerkzeug mit einer Justiereinrichtung zur Feinjustierung eines an einem Grundkörper des Zerspanungswerkzeugs einstellbar gehaltenen Schneidenträgers, gemäß dem Oberbegriff des Anspruchs 1. Ein solches Zerspanungswerkzeug ist aus EP 0 478 239 A bekannt.

Eine Justiereinrichtung zur Feinjustierung eines an einem Grundkörper eines Zerspanungswerkzeugs einstellbar gehaltenen Schneidemträgers wird im Besonderen dann eingesetzt, wenn es um die Einhaltung einer engen Durchmessertoleranz einer Bohrung geht. So zeigt und beschreibt beispielsweise die DE 4022579 A1 ein Zerspanungswerkzeug mit einem um eine Drehachse drehantreibbaren Grundkörper und einem am Grundkörper radial einstellbar angeordneten Schneidenträger, der ein Schneidwerkzeug trägt. Der Schneidenträger ist als ein zweiarmiger Schwenkbalken ausgeführt, der in einem im Grundkörper quer zur Drehachse ausgerichteten Schwenklager unter radialer Verstellung des an dem einen Hebelarm des Schwenkbalkens angeordneten Schneidwerkzeugs schwenkbar angeordnet ist. Die Verstellung des Schneidenträgers erfolgt über eine Stelleinrichtung, die eine im Grundkörper axial verschiebbar angeordnete Stellstange (in der DE 4022579 A1 als Steuerstange bezeichnet) aufweist, die in einem axialen Abstand zueinander zwei, in einander entgegengesetzter Richtung gegenüber der Stangenachse schräg angestellte Steuerflächen hat, an denen jeweils einer der Hebelarme über einen im Grundkörper im Wesentlichen in Zustellrichtung des Schneidenträgers verschiebbaren Druckstift anliegt. Die Stelleinrichtung ermöglicht durch eine werkzeugmaschinenseitige bewirkte Verschiebung der Stellstange eine werkzeugmaschinengesteuerte Verstellung des Schneidenträgers zwischen einer eingesteuerten Stellung, in der das am Schneidenträger gehaltene Schneidwerkzeug auf einem minimalen Durchmesser liegt, und einer ausgesteuerten Stellung, in der das am Schneidenträger gehaltene Schneidwerkzeug auf einem maximalen Durchmesser liegt.

In dem dem Schneidwerkzeug gegenüberliegenden Hebelarm des Schneidenträgers ist in einer den Schneidenträger durchsetzenden Gewindebohrung eine gegen die Stirnfläche des zugeordneten Druckstifts verstellbare Stellschraube (in der DE 4022579 A1 als Einstellbolzen bezeichnet) angeordnet. Die Stellschraube ermöglicht eine Justierung des Schneidenträgers relativ zur Längsmittelachse oder Drehachse des Grundkörpers bzw. der Stellstange im Grundkörper. Die Stellschraube bildet mit der Gewindebohrung eine in den Schneidenträger integrierte Justiereinrichtung für eine individuelle Lagejustierung des Schneidenträgers relativ zur Längsmittelachse oder Drehachse des Grundkörpers. Über diese Lagejustierung hinaus, die sich üblicherweise innerhalb eines sehr eng begrenzten Justierbereich abspielt, ist die Lage des Schneidenträgers aber nicht weiter einstellbar.

Zur Erreichung einer hohen Zustellgenauigkeit wird in der DE 4022579 A1 vorgeschlagen, den Schneidenträger fliehkraftneutral und spielfrei zu stellen. Hierzu wird in der DE 4022579 A1 eine Ausführungsform vorgeschlagen, bei der zwischen der Stellschraube einerseits und dem Druckstift andererseits ein Druckfederpaket angeordnet ist. Das Federpaket soll dafür sorgen, dass trotz der Herstellungsungenauigkeiten immer Spielfreiheit im Bereich des Verstellmechanismus gewährleistet ist. Das Federpaket übt auf die Stellschraube eine Druckkraft aus, durch die die, in Druckkraftrichtung gesehen, vorderen Gewindeflanken der Stellschraube gegen die gegenüberliegenden Gewindeflanken der Gewindebohrung gedrückt werden. Insofern wird ein Gewindespiel zwischen den vorderen Gewindeflanken der Stellschraube und den gegenüberliegenden Gewindeflanken der Gewindebohrung reduziert. Ein zwischen den hinteren Gewindeflanken der Stellschraube und den gegenüberliegenden Gewindeflanken der Gewindebohrung vorhandenes Gewindespiel bleibt aber bestehen bzw. wird sogar vergrößert. Bei einer zerspanenden Bearbeitung eines Werkstücks erfährt der Schneidenträger über das Schneidwerkzeug jedoch unvermeidbar in der Größe und/oder Richtung veränderliche Reaktionskräfte, die aufgrund des zwischen den hinteren Gewindeflanken der Stellschraube und den gegenüberliegenden Gewindeflanken der Gewindebohrung nach wie vor vorhandenen Gewindespiels in einer radialen Bewegung oder Schwingung des Schneidenträgers resultieren können. Eine Bewegung oder Schwingung des Schneidenträgers gefährdet jedoch die gewünschte hohe Zustellgenauigkeit oder Durchmessermaßhaltigkeit des Zerspanungswerkzeugs.

Ausgehend von der US 2 274 244 A liegt der Erfindung nun die Aufgabe zugrunde, ein Zerspanungswerkzeug mit einer Justiereinrichtung zu schaffen, mit der sich zur Erreichung einer hohen Durchmessermaßhaltigkeit einer Werkzeugschneide auf zuverlässige und einfache Art und Weise eine spielfreie Lagejustierung eines Schneidenträgers erreichen lässt.

Diese Aufgabe wird durch ein Zerspanungswerkzeug gemäß dem Anspruch 1 gelöst. Vorteilhafte oder bevorzugte Weiterbildungen sind Gegenstand abhängiger Ansprüche.

Ein erfindungsgemäßes stehend oder drehend betriebenes Zerspanungswerkzeug hat einen sich entlang einer Längsmittelachse oder Drehachse erstreckenden Grundkörper, und ein am Grundkörper radial einstellbar gehaltenes Schneidwerkzeug und umfasst eine zwischen dem Grundkörper und dem Schneidwerkzeug wirkende Justiereinrichtung zur Feinjustierung eines am Grundkörper des Zerspanungswerkzeugs einstellbar gehaltenen Schneidenträgers relativ zum Grundkörper, mit einer die Lage des Schneidenträgers gegenüber dem Grundkörper bestimmenden Stellschraube. Die Justiereinrichtung umfasst eine Gewindebuchse, mit der die Stellschraube verschraubt ist und die ein quer zur Buchsenachse elastisch verformbares Wandsegment aufweist, und ein seitlich der Gewindebuchse angeordnetes Druckelement, das das Wandsegment gegen die Stellschraube drückt, wobei das Wandsegment durch einen die Gewindebuchsenwand durchdringenden Schlitz ausgebildet ist. Der Schlitz ist im Wesentlichen U-förmig ausgebildet, und die Stellschraube wirkt mit einem Keilgetriebe zusammen.

Es sei angemerkt, dass die erfindungsgemäße Justiereinrichtung durch eine entsprechende Ausrichtung und Anordnung am Zerspanungswerkzeug eingesetzt werden kann, um die axiale und/oder radiale Lage des Schneidenträgers relativ zu einer Längsmittelachse oder Drehachse des Zerspanungswerkzeugs einzustellen.

Des Weiteren sei angemerkt, dass unter dem oben erwähnten Schneidenträger allgemein eine Einheit, ein Teil, ein Körper ein Mittel oder dergleichen verstanden wird, das - mittelbar oder unmittelbar - eine oder mehrere Schneiden für eine spanende Bearbeitung eines Werkstücks trägt. Ein erfindungsgemäßer Schneidenträger kann beispielsweise in der Art einer Wippe als ein am Grundkörper schwenkbar gehaltener zweiarmiger Hebel, beispielsweise nach dem Vorbild der eingangs diskutierten DE 4022579 A1, oder in Art der eines am Grundkörper gehaltenen elastisch verformbaren Biegebalkens, z.B. als ein sogenannter Klemmhalter, im Besonderen Kurzklemmhalter, ausgebildet sein und ein Schneidwerkzeug, beispielsweise einen Schneideinsatz, eine Schneidplatte oder dergleichen, mit einer oder mehreren Schneiden tragen. Von einem derartigen Schneidenträger abweichend, der eine oder mehrere Schneiden - mittelbar - trägt, kann ein erfindungsgemäßer Schneidenträger aber auch in Gestalt eines einteilig oder einstückig gestalteten Schneidwerkzeugs, beispielsweise in der Art eines Drehmeißels, eines Schneideinsatzes, einer Schneidplatte oder dergleichen, ausgebildet sein und eine oder mehrere Schneiden für eine spanende Bearbeitung eines Werkstücks - unmittelbar - tragen.

Zur Einstellung oder Reduzierung des Gewindespiels zwischen dem Außengewinde der Stellschraube und dem Innengewinde der Gewindebohrung der Gewindebuchse wird erfindungsgemäß vorgeschlagen, die Stellschraube nicht direkt mit dem Grundkörper oder dem Schneidenträger zu verschrauben, sondern mit einer Gewindebuchse, die im Grundkörper oder Schneidenträger festgelegt ist. Die sich entlang einer Buchsenachse erstreckende Gewindebuchse weist erfindungsgemäß ein quer, im Besonderen radial, zur Buchsenachse elastisch verformbares Wandsegment und ein außenseitig, d.h. von außerhalb der Gewindebuchse, seitlich gegen das Wandsegment drückendes Druckelement auf, das das Wandsegment gegen die Stellschraube drückt.

Die erfindungsgemäße Lösung beruht auf der Idee, dass durch die Druckbeaufschlagung des elastisch nachgiebigen Wandsegments der Gewindebuchse ein dem Wandsegment entsprechender Bereich des Innengewindes der Gewindebuchse in einer Richtung quer zur Buchsenachse gegen das Außengewinde der in die Gewindebuchse eingeschraubten Stellschraube gedrückt wird, wodurch sich das Gewindespiel zwischen dem dem Wandsegment entsprechenden Bereich des Innengewindes der Gewindebuchse und dem Außengewinde der Stellschraube in beiden Achsrichtungen reduzieren lässt. Im Besonderen wird durch die Verdrängung des dem Wandsegment entsprechenden Bereichs des Innengewindes der Gewindebuchse nach innen gegen das Außengewinde der Stellschraube erreicht, dass die Gewindeflanken des Innengewindes in beiden Achsrichtung gegen die gegenüberliegenden Gewindeflanken des Außengewindes gedrückt werden. Damit wird eine axiale Bewegung der Stellschraube innerhalb der Gewindebuchse eingeschränkt.

Im Unterschied zu der aus der DE 4022579 A1 bekannten Justiereinrichtung, bei der das Gewindespiel zwischen dem Außengewinde der Stellschraube und dem Innengewinde der Gewindebohrung durch eine Druckbeaufschlagung der Stellschraube in Richtung der Bohrungs- oder Schraubenachse reduziert wird, wird also erfindungsgemäß das Gewindespiel zwischen dem Außengewinde der Stellschraube und dem Innengewinde der Gewindebuchse durch eine Druckbeaufschlagung eines Wandsegments der Gewindebuchse in einer Richtung quer zur Buchsen- oder Schraubenachse reduziert.

Dank des reduzierten Gewindespiels lässt sich eine axiale Bewegung der Stellschraube relativ zur Gewindebuchse und damit eine Bewegung zwischen dem Schneidenträger und dem Grundkörper des Zerspanungswerkzeugs selbst dann einschränken, wenn der Schneidenträger während einer zerspanenden Bearbeitung eines Werkstücks veränderliche Zerspankräfte erfährt. Durch die erfindungsgemäße Justiereinrichtung lässt sich daher eine höhere Durchmessermaßhaltigkeit erreichen.

Das elastisch nachgiebige Wandsegment ist erfindungsgemäß durch einen die Gewindebuchsenwand durchdringenden im Wesentlichen U-förmigen Schlitz ausgebildet.

Dabei kann die Justiereinrichtung in den Grundkörper integriert sein wobei die Stellschraube dann vom Grundkörper aus mittelbar oder unmittelbar gegen das Schneidwerkzeug drückt.

Insbesondere in dem Fall, in dem das Zerspanungswerkzeug analog zu dem in der DE 4022579 A1 angegebenen Zerspanungswerkzeug eine zentrale Stelleinrichtung aufweist, kann die Justiereinrichtung in den am Grundkörper axial- und/oder radial einstellbaren Schneidenträger integriert sein, wobei die Stellschraube dann vom Schneidenträger aus mittelbar oder unmittelbar am Grundkörper, beispielsweise einer zentralen Stelleinrichtung, abgestützt ist. Hat das Zerspanungswerkzeug analog zu dem in der DE 4022579 A1 angegebenen Zerspanungswerkzeug beispielsweise eine zentrale Stelleinrichtung kann die Stellschraube mittelbar, z.B. über einen Druckstift, oder unmittelbar in radialer Richtung an einer Steuerschräge der Stelleinrichtung abgestützt sein.

Ungeachtet der konkreten Ausgestaltung und Anordnung des Schneidenträgers am Grundkörper kann die Gewindebuchse in einer Durchgangsbohrung im Schneidenträger angeordnet sein, die von der dem Grundkörper abgewandten Seite her, beispielsweise radial von außen her, einen Betätigungszugriff auf die Stellschraube gestattet.

Die Gewindebuchse kann im Schneidenträger in Axial- und/oder Umfangsrichtung der Durchgangsbohrung stoff-, form- und/oder kraftschlüssig festgelegt sein.

Um über eine angemessene Länge eine das Gewindespiel zuverlässig reduzierende Anlage an der Stellschraube sicherzustellen, kann sich das Wandsegment in Axialrichtung der Gewindebuchse erstrecken.

Des Weiteren kann die Gewindebuchse zur Festlegung am Grundkörper oder Schneidenträger an ihrem einen Ende einen einen Anschlag bildenden Flansch aufweisen. Über den Flansch kann die Lage der Gewindebuchse in Richtung der Buchsenachse festgelegt werden.

Das seitlich gegen das Wandsegment drückende Druckelement kann vorteilhaft aus einer mit dem Grundkörper oder Schneidenträger verschraubten Spannschraube gebildet sein, die das Wandsegment gegen die Stellschraube drückt. Durch eine Drehbetätigung der Spannschraube ist eine einstellbare Reduzierung des Gewindespiels zwischen dem Außengewinde der Stellschraube und einem dem Wandsegment entsprechenden Bereich des Innengewindes der Gewindebuchse in der Weise möglich, dass eine Schraubbetätigung der Stellschraube gerade noch möglich ist, andererseits jedoch kein störendes Gewindespiel mehr vorhanden ist. Im Unterschied zu der aus der DE 4022579 A1 bekannten Justiereinrichtung bietet die erfindungsgemäße Lösung, bei der das Druckelement als eine Spannschraube ausgebildet ist, also die Möglichkeit, das Gewindespiel nicht lediglich zu reduzieren, sondern das Gewindespiel einzustellen bzw. zu korrigieren.

Nachfolgend wird mit Hilfe der beigefügten Zeichnungen eine bevorzugte Ausführungsform eines erfindungsgemäßen mehrschneidigen Zerspanungswerkzeugs mit einer erfindungsgemäßen Justiereinrichtung beschrieben. Es zeigt/zeigen:
Fig. 1 eine perspektivische Seitenansicht eines erfindungsgemäßen mehrschneidigen Zerspanungswerkzeugs mit einer erfindungsgemäßen Justiereinrichtung;
Fig. 2 eine Längsschnittansicht des Zerspanungswerkzeugs;
Fig. 3 eine Querschnittansicht des Zerspanungswerkzeugs an der in Fig. 2 durch eine Linie III-III gekennzeichneten Stelle;
Fig. 4 eine perspektivische Seitenansicht eines ein Schneidwerkzeug tragenden Schneidenträgers; und
Fig. 5 und 6 verschiedene Ansichten einer wandsegmentgeschlitzten Gewindebuchse der erfindungsgemäßen Justiereinrichtung.

### Bevorzugte Ausführungsform

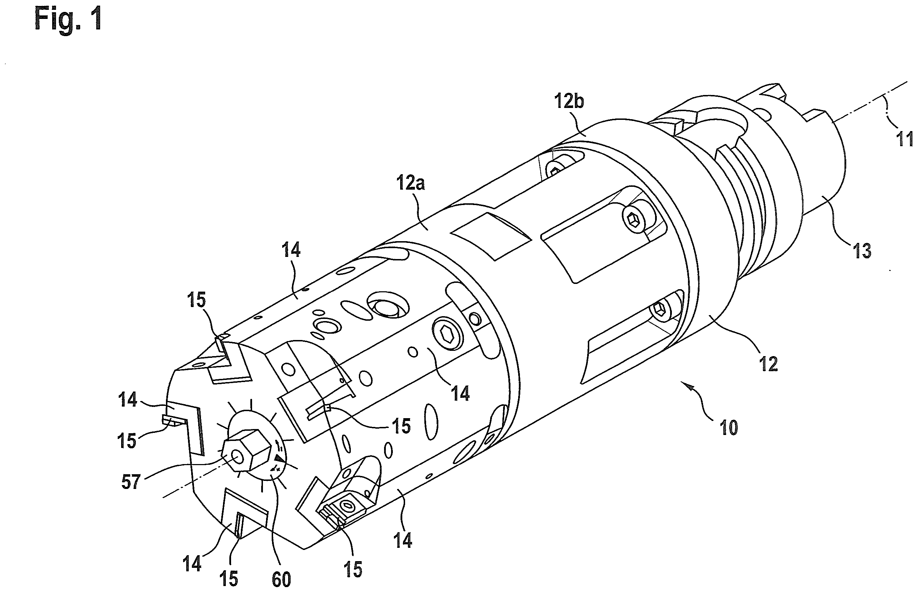

Die Fig. 1 zeigt in einer perspektivischen Seitenansicht ein mehrschneidiges Zerspanungswerkzeug 10, das beispielsweise für die Bearbeitung einer Zylinderbohrung eines Verbrennungsmotors eingesetzt wird. Das Zerspanungswerkzeug 10 kann daher auch als ein Zylinderbohrungsbearbeitungswerkzeug oder allgemein als Bohrungsnachbearbeitungs- oder Bohrungsfeinbearbeitungswerkzeug bezeichnet werden.

Das Zerspanungswerkzeug 10 hat einen sich entlang einer Längsmittelachse oder Drehachse 11 erstreckenden Grundkörper 12, der in der gezeigten Ausführungsform aus einem vorderen Teil und einem hinteren Teil modular aufgebaut ist. Wie die Fig. 1 zeigt, sind der vordere Teil 12a und der hintere Teil 12b miteinander verschraubt. An seinem hinteren (in Fig. 1 rechten) Ende weist das Zerspanungswerkzeug 10 einen mit beispielsweise einer Werkzeugmaschinenspindel zu verbindenden Kupplungsschaft 13 auf, der in der gezeigten Ausführungsform aus einem HSK (Hohlschaftkegel)-Schaft gebildet ist. Alternativ dazu kann aber auch beispielsweise ein sogenannter SK- (Steilkegel)-Schaft oder dergleichen vorgesehen sein. Das Zerspanungswerkzeug 10 kann stehend oder drehangetrieben eingesetzt werden.

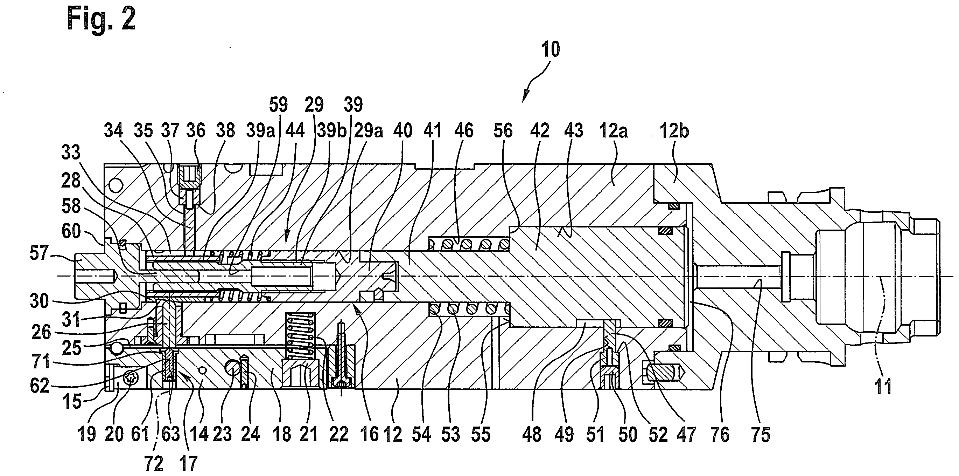

An dem vorderen (in Fig. 1 linken) Ende des Zerspanungswerkzeugs 10 sind in äquidistanter Winkelteilung im Grundkörper 12 fünf Schneidenträger 14 angeordnet. Jeder Schneidenträger 14 trägt ein Schneidwerkzeug 15, beispielsweise einen Schneideinsatz, eine Schneidplatte oder dergleichen, und ist über eine in Fig. 2 zu sehende zentrale Stelleinrichtung 16 synchron mit den jeweils anderen Schneidenträgern 14 radial nach innen oder außen verstellbar. Unabhängig davon ist jeder Schneidenträger 14 über eine zugeordnete Justiereinrichtung 17 in radialer Richtung relativ zu der zentralen Stelleinrichtung 16 bzw. zur Längsmittelachse oder Drehachse 11 des Grundkörpers 12 individuell lagejustierbar.

### Schneidenträger 14

Die Schneidenträger 14 zeichnen sich alle durch einen gleichen Aufbau und eine gleiche Funktionsweise aus, so dass im Folgenden der Aufbau und die Funktionsweise der Schneidenträger 14 am Beispiel des in Fig. 2 gezeigten, untenliegenden Schneidenträgers 14 näher beschrieben werden.

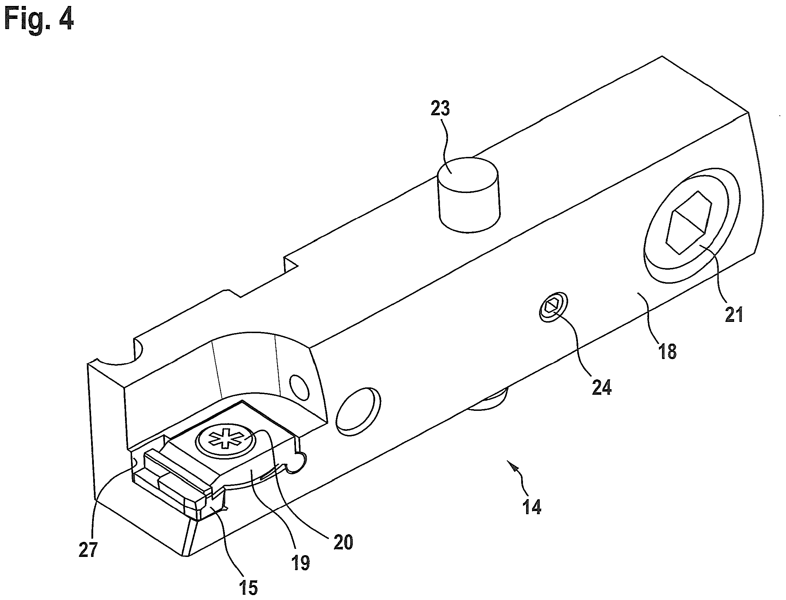

Der in Fig. 4 in größerem Maßstab gezeigte Schneidenträger 14 weist im Wesentlichen einen Trägerkörper 18, das am Trägerkörper 18 gehaltene Schneidwerkzeug 15, eine Klemmpratze 19 zum Festklemmen des Schneidwerkzeugs 15, eine Klemmschraube 20, die Justiereinrichtung 17, eine Federanschlagschraube 21, eine Druckfeder 22, einen Lagerbolzen 23 und eine Sicherungsschraube 24 auf.

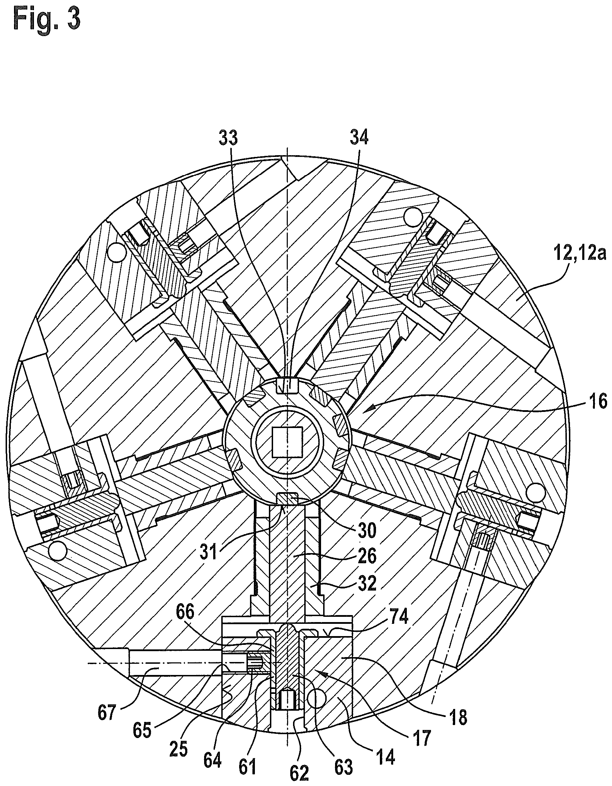

Man erkennt in Fig. 3, dass der Trägerkörper 18 aus einem prismatischen oder quaderförmigen Block gefertigt ist, der in einer sich in Richtung der Längsmittelachse oder Drehachse 11 des Grundkörpers 12 erstreckenden prismatischen oder quaderförmigen, stirn- und außenumfangsseitig offenen Aufnahmetasche 25 im Grundkörper 12 aufgenommen ist, die in einem radialen Abstand zur Längsmittelachse oder Drehachse 11 ausgebildet ist. Bezogen auf eine die Längsmittelachse oder Drehachse 11 enthaltende Längsschnittebene (vgl. Fig. 3) ist die Aufnahmetasche 25 im Querschnitt im Wesentlichen symmetrisch geformt.

Der Schneidenträger 14 ist in der Aufnahmetasche 25 über einen am Grundkörper 12 gelagerten Lagerbolzen 23 schwenkbeweglich gehalten. Der den Trägerkörper 18 durchdringende Lagerbolzen 23 erstreckt sich in einer Richtung quer zur Längsmittelachse oder Drehachse 11 und ist beidseits des Trägerkörper 18 in nicht näher bezeichneten Achsbohrungen im Grundkörper 12 angeordnet. Der Lagerbolzen 23 ist durch die außenumfangsseitig zugängliche, im Trägerkörper 18 verschraubte Sicherungsschraube 24 am Trägerkörper 18 verliersicher befestigt. Der Schneidenträger 14 ist damit in der Aufnahmetasche 25 um eine quer zur Längsmittelachse oder Drehachse 11 ausgerichtete Schwenkachse schwenkbar aufgenommen.

Der Trägerkörper 18 bildet damit einen zweiseitigen Hebel, der in der Art einer Wippe schwenkbar gelagert ist. Wie es in Fig. 2 gezeigt ist, ist die Justiereinrichtung 17 in Fig. 2 auf der Seite des linken, längeren Hebelarms angeordnet, während die Druckfeder 22 und Federanschlagschraube 21 auf der Seite des rechten, kürzeren Hebelarms angeordnet sind. Die Federanschlagschraube 21 bildet einen trägerkörperseitigen Anschlag für die Druckfeder 22. Die Druckfeder 22 übt über den kürzeren Hebelarm auf den Schneidenträger 14 eine Federkraft dergestalt aus, dass der Schneidenträger 14 in Fig. 2 im Uhrzeigersinn verschwenkt wird. Die Fig. 2 zeigt, dass der Trägerkörper 18 an dem längeren Hebelarm über die Justiereinrichtung 17 und einen im Grundkörper 12 radial verschiebbar angeordneten Druckstift 26 an der zentralen Stelleinrichtung 16 abgestützt ist.

Das Schneidwerkzeug 15 ist, wie es in Fig. 4 gezeigt ist, in einem in den Trägerkörper 18 eingearbeiteten stirn- und außenumfangsseitig zugänglichen Sitz 27 formschlüssig aufgenommen und wird durch Betätigung der Klemmschraube 20 über die Klemmpratze 19 gegen den Trägerkörper 18 geklemmt.

### Stelleinrichtung 16

Die zentrale Stelleinrichtung 16 weist, wie es in Fig. 2 gezeigt ist, eine im Grundkörper 12 angeordnete Gewindehülse 28 und einen die Gewindehülse 28 axial verschiebenden Gewindetrieb 29 auf.

Die Gewindehülse 28 bildet ein eine radiale Verstellung der Schneidenträger 14 bewirkendes Stellmittel. Sie ist in einer zentralen Bohrung 29a im Grundkörper 12 drehfest, aber axial verschiebbar angeordnet und wirkt über ein Keilgetriebe mit den Schneidenträgern 14 zusammen. Die Gewindehülse 28 weist hierzu, wie es in Fig. 3 gezeigt ist, an ihrem Außenumfang eine der Anzahl der Schneidenträger 14 entsprechende Zahl von Stützleisten 30 auf. Jede Stützleiste 30 ist dabei einem der Schneidenträger 14 zugeordnet und hat außenseitig eine gegenüber der Längsmittelachse oder Drehachse 11 schräg angestellte Steuerfläche 31, an der ein mit dem Schneidenträger 14 zusammenwirkender Druckstift 26 anliegt. Jeder Druckstift 26 ist in einer im Grundkörper 12 festgelegten Führungsbuchse 32 radial verschiebbar angeordnet. Die Steuerschräge 31 bildet mit der Stirnseite des Druckstifts 26 das oben erwähnte Keilgetriebe, das eine axiale Bewegung der Gewindehülse 28 in eine radiale Bewegung des Druckstifts 26 umwandelt. Die drehfeste Anordnung der Gewindehülse 28 in der zentralen Bohrung 29a im Grundkörper 12 wird durch einen in einen axialen Längsschlitz 33 am Außenumfang der Gewindehülse 28 eingreifenden Sperrstift 34 erreicht, der in einer radialen Stufenbohrung 35 im Grundkörper 12 lösbar gehalten wird. Wie die Fig. 2 zeigt, wird der Eingriff des Sperrstifts 34 in den Längsschlitz 33 der Gewindehülse 28 durch eine Sicherungsschraube 36 gesichert. Der Sperrstift 34 hat einen im Durchmesser vergrößerten Kopf 37, der radial nach innen gegen eine Stufe 38 der Stufenbohrung 35 anschlägt. Durch die so erreichte Festlegung des Sperrstifts 34 in radialer Richtung lässt sich verhindern, dass der Sperrstift 34 gegen den Grund des Längsschlitzes 33 drückt und dadurch die axiale Verschiebbarkeit der Gewindehülse 28 behindert. In Fig. 3 ist nur das in den Längsschlitz 33 eingreifende Ende des Sperrstifts 34 zu sehen, das in einem radialen Abstand zum Grund des Längsschlitzes 33 gehalten ist.

Der axiale Antrieb der Gewindehülse 28 erfolgt über den Gewindetrieb 29. Der Gewindetrieb 29 weist, wie es in Fig. 2 gezeigt ist, im Wesentlichen eine Gewindespindel 39 und eine in einem axialen Abstand zur Gewindehülse 28 in der zentralen Bohrung 29a im Grundkörper 12 angeordnete Lagerbuchse 40 auf. In der gezeigten Ausführungsform ist die Gewindespindel 39 aus einer Differentialgewindespindel gebildet, die über einen ersten Gewindeabschnitt 39a mit einer Innengewindebohrung der Gewindehülse 28 und über einen zweiten Gewindeabschnitt 39b mit einer Innengewindebohrung der Lagerbuchse 40 verschraubt ist.

Die Lagerbuchse 40 ist analog zur Gewindehülse 28 in der zentralen Bohrung 29a im Grundkörper 12 drehfest, aber axial verschiebbar angeordnet. Die drehfeste Anordnung der Lagerbuchse 40 wird durch eine drehfeste Verbindung mit einem Kolbenfortsatz 41 eines später beschriebenen Kolbens 42 erreicht, der in einer Kolbenbohrung 43 im Grundkörper 12 drehfest, aber axial verschiebbar angeordnet ist.

Zwischen der Gewindehülse 28 und der Lagerbuchse 40 ist eine Druckfeder 44 angeordnet, um einerseits ein Gewindespiel zwischen dem Außengewinde des ersten Gewindeabschnitts 39a der Gewindespindel 39 und dem Innengewinde der Gewindehülse 28 und andererseits ein Gewindespiel zwischen dem Außengewinde des zweiten Gewindeabschnitts 39b der Gewindespindel 39 und dem Innengewinde der Lagerbuchse 40 zu reduzieren.

Der so gestaltete Gewindetrieb 29 bietet für eine axiale Verschiebung der Gewindehülse 28 zwei voneinander unabhängige Möglichkeiten:

### 1) Synchrones Ein-/Aussteuern der Schneidenträger 14

Einerseits kann durch eine Verschiebung der Lagerbuchse 40 der gesamte Gewindetrieb 29 zusammen mit der Gewindehülse 28 ohne eine Verdrehung der Gewindespindel 39, d.h. ohne eine Relativbewegung zwischen der Gewindehülse 28 und der Lagerbuchse 40, verschoben werden. Diese Verstellmöglichkeit wird genutzt, um die Schneidenträger 14 synchron zwischen einer eingesteuerten Stellung, in der die an den Schneidenträgern 14 gehaltenen Schneidwerkzeuge 15 auf einem minimalen Durchmesser liegen, und einer ausgesteuerten Stellung, in der die an den Schneidenträgern 14 gehaltenen Schneidwerkzeuge 15 auf einem maximalen Durchmesser liegen, zu verstellen.

Hierzu ist der Gewindetrieb 29, im Besonderen die Lagerbuchse 40, zug-/druckfest mit dem bereits erwähnten Kolben 42 verbunden. Der Kolben 42 ist in einer Kolbenbohrung 43 im Grundkörper 12 drehfest, aber axial verschiebbar angeordnet. Man erkennt in Fig. 2, dass die Kolbenbohrung 43 über eine Verbindungsbohrung 46 mit der zentralen Bohrung 29a verbunden ist. Der stufenartig ausgebildete Kolben 42 weist einen Kolbenfortsatz 41 auf, der die Verbindungsbohrung 46 durchdringt und im Bereich der zentralen Bohrung 29a dreh- sowie zug-/druckfest mit der Lagerbuchse 40 verbunden ist. Die drehfeste Anordnung des Kolbens 42 in der Kolbenbohrung 43 wird durch einen Sperrstift 47 erreicht, der in einen axialen Längsschlitz 48 am Außenumfang des Kolbens 42 eingreift und in einer radialen Stufenbohrung 49 im Grundkörper 12 lösbar gehalten ist. Wie die Fig. 2 zeigt, wird der Eingriff des Sperrstifts 47 in den Längsschlitz 48 des Kolbens 42 durch eine Sicherungsschraube 50 gesichert. Der Sperrstift 47 hat einen im Durchmesser vergrößerten Kopf 51, der radial nach innen gegen eine Stufe 52 der Stufenbohrung 49 anschlägt. Durch die so erreichte Festlegung des Sperrstifts 47 in radialer Richtung lässt sich verhindern, dass der Sperrstift 47 gegen den Grund des Längsschlitzes 48 drückt und dadurch die axiale Verschiebbarkeit des Kolbens 42 behindert.

Zwischen dem Kolben 42 und dem Grundkörper 12 ist eine Druckfeder 53 gespannt, die den Kolben 42 in Fig. 2 nach rechts drängt. Grundkörperseitig ist die Druckfeder 53 an einer zwischen der Verbindungsbohrung 46 und der zentralen Bohrung 29a ausgebildeten Stufe 54 abgestützt, kolbenseitig ist die Druckfeder 53 an einer den Kolbenfortsatz 41 des Kolbens 42 umgebenden Ringfläche 55 abgestützt.

Eine zwischen der Verbindungsbohrung 46 und der Kolbenbohrung 43 gebildete Stufe 56 bildet einen Axialanschlag für den Kolben 42. Der Kolben 42 wird in der gezeigten Ausführungsform fluidisch gegen die Federkraft der Druckfeder 53 in Fig. 2 nach links angetrieben. Hierzu ist der Kolben 42 in der Kolbenbohrung 43 abgedichtet aufgenommen. Über einen im Grundkörper 12 ausgebildeten Druckkanal 75 wird in einen vom Kolben 42 begrenzten Druckraum 76 der Kolbenbohrung 43 ein Fluiddruck eingespeist, wodurch der Kolben 42 gegen die Federkraft der Druckfeder 53 in Fig. 2 nach links verdrängt wird. Eine Verdrängung des Kolbens 42 bewirkt eine gleichgerichtete Verschiebung der Lagerbuchse 40 und damit des Gewindetriebs 29 und der Gewindehülse 28.

Die an den Steuerschrägen 31 der Gewindehülse 28 abgestützten Schneidenträger 14 können daher durch eine werkzeugmaschinenseitig bewerkstelligte Druckbeaufschlagung des Kolbens 42 synchron ein- und ausgesteuert, d.h. radial nach innen und außen verstellt, werden.

### 2) Synchrone Grob- oder Voreinstellung der Schneidwerkzeuge 15

Andererseits kann durch eine Verdrehung der Gewindespindel 39, z.B. in dem in Fig. 2 gezeigten Zustand, in dem der Kolben 42 gegen den Anschlag 56 anliegt, die Gewindehülse 28 relativ zur Lagerbuchse 40 verstellt werden. Aufgrund der dreh-und zug-/druckfesten Verbindung mit dem Kolben 42 ändert sich bei einer Verdrehung der Gewindespindel 39 weder die axiale Lage noch die Drehlage der Lagerbuchse 40. Durch eine geeignete Auslegung des Steigungsunterschieds zwischen dem ersten Gewindeabschnitt 39a und dem zweiten Gewindeabschnitt 39b der Gewindespindel 39 lässt sich eine präzise Verschiebung der Gewindehülse 28 und damit eine präzise Verstellung der Schneidenträger 14 erreichen. Diese Verstellmöglichkeit kann für eine synchrone Grobeinstellung der an den Schneidenträgern 14 gehaltenen Schneidwerkzeuge 15 in Richtung eines vorgegebenen Nenndurchmessers genutzt.

Hierzu weist die Stelleinrichtung 16 ein am Stirnende des Grundkörpers 12 drehbeweglich, aber axialfest gehaltenes Betätigungselement 57 auf, das mit der Gewindespindel 39 drehfest, aber axialbeweglich in Eingriff ist. In der gezeigten Ausführungsform hat das Betätigungselement 57 einen im Querschnitt viereckigen Fortsatz 58, der formschlüssig in eine im Querschnitt viereckige Eingriffsöffnung 59 der Gewindespindel 39 eingreift. Mit dem Betätigungselement 57 wird auch die Gewindespindel 39 verdreht. Durch die Verschraubung mit der Gewindehülse 28 wird diese bei einer Verdrehung der Gewindespindel 39 axial verschoben. Im Hinblick auf eine beispielsweise manuelle Betätigung des Betätigungselements 57 kann das Betätigungselement, wie in Fig. 1 zu sehen, einen Skalenring 60 aufweisen, der eine überprüfbare Verdrehung des Betätigungselements 57 und damit der Gewindespindel 39 ermöglicht.

Die an den Steuerschrägen der Gewindehülse 28 abgestützten Schneidenträger 14 können daher durch eine manuelle oder auch werkzeugmaschinenseitig bewerkstelligte Drehbetätigung des Betätigungselements 57 synchron auf einen vorgegebenen Nenndurchmesser eingestellt werden. Diese Voreinstellung kann in dem in Fig. 2 gezeigten ausgesteuerten Zustand der Schneidenträger 14 erfolgen, in dem die Schneidwerkzeuge 15 auf einem maximalen Durchmesser liegen. Die Voreinstellung kann natürlich aber auch in einem eingesteuerten Zustand der Schneidenträger 14 erfolgen.

### Justiereinrichtung 17

Gerade für die Bearbeitung einer Zylinderbohrung eines Verbrennungsmotors ist es jedoch entscheidend, dass alle Schneidwerkzeuge 15 exakt auf einem vorgegebenen Nenndurchmesser des Zerspanungswerkzeugs 10 liegen. Um dieser Forderung gerecht zu werden, müssen die Schneidwerkzeuge 15 µm-genau auf ein vorgegebenes Nenndurchmessermaß nachjustiert werden können. Das ist beispielsweise dann erforderlich, wenn das Zerspanungswerkzeug 10 neu zusammengesellt wird, oder wenn ein Schneidenverschleiß eine Nachjustierung einzelner Schneidwerkzeuge 15 erforderlich macht.

Zu diesem Zweck sind die Schneidenträger 14 jeweils gegenüber dem Grundkörper 12, im Besonderen der im Grundkörper 12 angeordneten zentralen Stelleinrichtung 16, lagejustierbar ausgeführt. Jedem Schneidenträger 14 ist eine individuell betätigbare Justiereinrichtung 17 zugeordnet, über die der Schneidenträger 14 und damit das an dem Schneidenträger 14 gehaltene Schneidwerkzeug 15 relativ zum Grundkörper 12, im Besonderen der Längsmittelachse oder Drehachse 11, radial einstellbar sind.

Die auf der Seite des längeren Hebelarms in den Trägerkörper 18 integrierte Justiereinrichtung 17 weist eine wandsegmentgeschlitzte Gewindebuchse 61, die in einer im Wesentlich radial verlaufenden Gewindebuchsenbohrung 62 im Trägerkörper 18 stoff-, kraft- und/oder formschlüssig, in Bezug auf die Bohrungsachse der Gewindebuchsenbohrung 62 dreh- und axialfest angeordnet ist, eine in die Gewindebuchse 61 eingeschraubte Stellschraube 63, die über den bereits erwähnten Druckstift 26 mit der entsprechenden Steuerschräge 31 der Gewindehülse 28 zusammenwirkt, und eine in Fig. 3 zu erkennende, seitlich der Gewindebuchse 61 angeordnete Spannschraube 64 auf, die in einer quer zur Gewindebuchsenbohrung 62 verlaufenden Gewindebohrung 65 im Trägerkörper 18 eingeschraubt ist und als ein Druckelement ein elastisch verformbares Wandsegment 66 nach innen gegen die Stellschraube 63 drückt.

Die die Spannschraube 64 aufnehmende Gewindebohrung 65 ist über eine im Durchmesser größere Eingriffsbohrung 67 im Grundkörper 12 vom Außenumfang des Grundkörpers 12 her zugänglich. Der Durchmesser der Eingriffsbohrung 67 im Grundkörper 12 kann so groß sein, dass die gegen das Wandsegment 66 der Gewindebuchse 61 drückende Spannschraube 64 in einer beliebigen Schwenklage des Schneidenträgers 14 mittels eines durch die Eingriffsbohrung 67 geführten Werkzeugschlüssels, der in eine Schlüsselweite der Spannschraube 64 eingreift, betätigbar ist. Alternativ dazu kann der Durchmesser der Eingriffsbohrung 67 aber auch nur so groß sein, dass ein durch die Eingriffsbohrung 67 geführter Werkzeugschlüssel nur für einen vorgegebenen Schwenklagenbereich des Schneidenträgers 14 in die Schlüsselweite der Spannschraube 64 einführbar ist.

Die Gewindebuchsenbohrung 62 durchdringt den Trägerkörper 18 in radialer Richtung, wie es in Fig. 2 gezeigt ist, so dass die Stellschraube 63 radial von außen her mittels eines geeigneten Werkzeugschlüssels, der in eine Schlüsselweite der Stellschraube 63 eingreift, verstellbar ist.

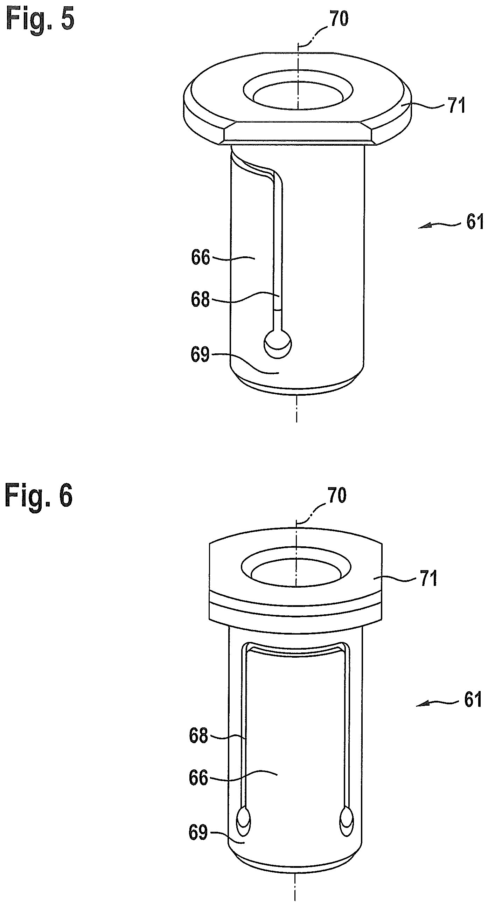

Die Gewindebuchse 61 ist im Besonderen in Fig. 5 gezeigt. Zu erkennen ist das Wandsegment 66, das durch einen die Gewindebuchsenwand durchdringenden U-förmigen Schlitz 68 ausgebildet ist. Die Fig. 5 zeigt, dass sich das Wandsegment 66 in Axialrichtung der Gewindebuchse 61 erstreckt und an einem ein Materialgelenk bildenden Abschnitt 69 noch in der Weise mit der Gewindebuchsenwand verbunden ist, dass es in einer Richtung quer zur Buchsenachse 70 elastisch nach innen verformbar ist.

An dem grundkörperseitigen Ende weist die Gewindebuchse 61 einen Flansch 71 auf, der durch Anlage an eine trägerkörperseitigen Anschlag 74 in der Gewindebuchsenbohrung 62 die Lage der Gewindebuchse 61 in Richtung der Bohrungsachse 72 der Gewindebuchsenbohrung 62 im Trägerkörper 18 bestimmt.

Durch eine Druckbeaufschlagung des elastisch nachgiebigen Wandsegments 66 der Gewindebuchse 61 mittels einer Schraubbetätigung der Spannschraube 64 kann der dem Wandsegment 66 entsprechende Bereich des Innengewindes der Gewindebuchse 61 gegen das Außengewinde der in die Gewindebuchse 61 eingeschraubten Stellschraube 63 gedrückt werden, um das Gewindespiel zwischen dem Innengewinde und dem Außengewinde zu reduzieren. Durch die Verdrängung des dem Wandsegment 66 entsprechenden Bereichs des Innengewindes der Gewindebuchse 61 gegen das Außengewinde der Stellschraube 63 werden die Gewindeflanken des Innengewindes in beiden Richtungen gegen die gegenüberliegenden Gewindeflanken des Außengewindes gedrückt. Es wird also das Gewindespiel beiderseits jeder Gewindeflanke des dem Wandsegment 66 entsprechenden Bereichs des Innengewindes der Gewindebuchse 61 reduziert. Dank des als Spannschraube 64 ausgebildeten Druckelements kann das Gewindespiel nicht nur reduziert, sondern soweit eingestellt oder korrigiert werden, dass eine Schraubbetätigung der Stellschraube 63 gerade noch möglich ist, ein störendes Gewindespiel aber beseitigt ist.

Die Fig. 2 zeigt, dass die Stellschraube 63 an ihrem grundkörperseitigen, abgerundeten Ende an dem bereits erwähnten Druckstift 26 und über den Druckstift 26 an der zugeordneten Steuerschräge 31 der Gewindehülse 28 der zentralen Stelleinrichtung 16 abgestützt ist.

Über die in den Schneidenträger 14 integrierte Justiereinrichtung 17 wird also eine spielfreie Feinjustierung des Schneidwerkzeugs 15 relativ zur Längsmittelachse oder Drehachse 11 des Zerspanungswerkzeugs 10 ermöglicht.

Durch die Integration der Justiereinrichtung 17 in den Trägerkörper 18 wird ein kompakt aufgebauter Schneidenträger 14 erhalten, der sich mit der integrierten Justiereinrichtung 17 und dem Schneidwerkzeug 15 als eine austauschbare Komponente handhaben und am Grundkörper 12 des Zerspanungswerkzeugs 10 anbringen lässt.

### Weitere Ausführungsformen

Selbstverständlich sind Abwandlungen von der zuvor beschriebenen Ausführungsform möglich, ohne den durch die Ansprüche definierten Grundgedanken der Erfindung zu verlassen.

In der gezeigten Ausführungsform ist die Justiereinrichtung in den Schneidenträger integriert. Das ist insbesondere dann von Vorteil, wenn eine zentrale Stelleinrichtung vorgesehen ist. Das muss aber nicht so sein. Wenn das Zerspanungswerkzeug über keine zentrale Stelleinrichtung verfügt, kann die Justiereinrichtung entweder in den Schneidenträger oder aber in den Grundkörper integriert sein. Entscheidend ist lediglich, dass die Justiereinrichtung funktional zwischen dem Schneidwerkzeug und dem Grundkörper angeordnet ist.

Des Weiteren kann die Stellschraube mit dem Grundkörper oder dem Schneidenträger mittelbar, beispielsweise wie in der zuvor beschriebenen Ausführungsform, oder aber unmittelbar zusammenwirken.

In der gezeigten Ausführungsform trägt jeder Schneidenträger genau ein Schneidwerkzeug. Der Schneidenträger kann wenigstens eine weitere Schneidplatte tragen, die - in axialer Richtung des Zerspanungswerkzeugs gesehen - beispielsweise auf Höhe der Schwenkachse des Schneidenträgers angeordnet ist. Die Lage der so angeordneten weiteren Schneidplatte wäre dann von einer mittels der Stelleinrichtung und/oder Justiereinrichtung durchgeführten Verstellung oder Justierung im Wesentlichen unbeeinflusst und kann beispielsweise für die Erzeugung einer Fase oder dergleichen vorgesehen sein.

Das Schneidwerkzeug kann aus einem Schneideinsatz, einer Schneidplatte oder dergleichen gebildet sein.

In der gezeigten Ausführungsform ist jeder Schneidenträger in einer Aufnahmetasche am Grundkörper wippenartig schwenkbar angeordnet. Abweichend davon kann jeder Schneidenträger aber auch in der Art eines elastisch verformbaren Biegebalkens ausgebildet und in einer Aufnahmetasche am Grundkörper eines Zerspanungswerkzeugs fest verschraubt sein. In einer anderen Abwandlung kann jeder Schneidenträger in einer Aufnahmetasche am Grundkörper eines Zerspanungswerkzeugs radial verschiebbar gehalten sein. Die oben verwendeten Angaben (in radialer Richtung) "ein-/aussteuerbar", "ein-/ausgesteuert", "ein-/aussteuern" etc. sind daher allgemein in dem Sinne zu verstehen, dass der oder die Schneidenträger (in radialer Richtung) verstellbar sind, wobei die Verstellung durch Verschwenken (wie in der gezeigten Ausführungsform), durch elastische Verformung oder durch geradliniges Verschieben des jeweiligen Schneidenträgers erfolgen kann.

In der gezeigten Ausführungsform erfolgt die Druckbeaufschlagung des Kolbens fluidisch, im Besonderen pneumatisch oder hydraulisch. Alternativ dazu kann die Druckbeaufschlagung des Kolbens elektromotorisch oder elektromagnetisch eingeleitet werden. Das Zerspanungswerkzeug kann daher einen hydraulisch, pneumatisch, elektromotorisch oder elektromagnetisch arbeitenden Stellantrieb aufweisen, der den Kolben antreibt.

In der gezeigten Ausführungsform hat das Zerspanungswerkzeug werkzeugmaschinenspindelseitig einen HSK (Hohlschaftkegel)-Schaft. Alternativ dazu kann aber auch ein sogenannter SK (Steilkegel)-Schaft oder dergleichen vorgesehen sein.

In der gezeigten Ausführungsform wird das Zerspanungswerkzeug zur Zylinderbohrungsbearbeitung eingesetzt. Die Erfindung ist aber nicht auf diese Anwendung beschränkt. Ein erfindungsgemäßes Zerspanungswerkzeug kann für die Nachbearbeitung oder Feinbearbeitung einer Bohrung auf einen vorgegebenen Nenndurchmesser verwendet werden.

Des Weiteren sind in der gezeigten Ausführungsform mehrere Schneidenträger am Grundkörper des Zerspanungswerkzeugs in axialer Richtung auf gleicher Höhe und in vorgegebenen Winkelabständen um die Längsmittelachse oder Drehachse des Grundkörpers angeordnet. Die Anordnung der Schneidenträger auf gleicher Höhe in axialer Richtung ist aber nicht zwingend. Die Schneidenträger können auch axial versetzt, beispielsweise wendelförmig versetzt, angeordnet sein.

Des Weiteren kann das Zerspanungswerkzeug genau einen oder wie in der beschriebenen Ausführungsform mehrere Schneidenträger haben.

Die an der Gewindehülse vorgesehenen Steuerflächen können unmittelbar in das Gewindehülsenmaterial eingearbeitet sein. D.h., dass die Stützleisten entfallen können. Des Weiteren kann die Gewindehülse anstelle einzelner Steuerflächen eine rotationssymmetrische Konusfläche aufweisen, an der der oder die Schneidenträger mittelbar oder unmittelbar abgestützt ist oder sind.

## Patentansprüche

1. Zerspanungswerkzeug (10) mit einem sich entlang einer Längsmittelachse oder Drehachse (11) erstreckenden Grundkörper (12) und einem am Grundkörper (12) radial einstellbar gehaltenen Schneidwerkzeug (15), umfassend:
eine zwischen dem Grundkörper (12) und dem Schneidwerkzeug (15) wirkende Justiereinrichtung (17) zur Feinjustierung eines am Grundkörper (12) des Zerspanungswerkzeugs (10) einstellbar gehaltenen Schneidenträgers (14) relativ zum Grundkörper (12), mit einer die Lage des Schneidenträgers (14) gegenüber dem Grundkörper (12) bestimmenden Stellschraube (63), aufweisend:
eine Gewindebuchse (61), mit der die Stellschraube (63) verschraubt ist und die ein quer zur Buchsenachse (70) elastisch verformbares Wandsegment (66) aufweist, und
ein seitlich der Gewindebuchse (61) angeordnetes Druckelement (64), das das Wandsegment (66) gegen die Stellschraube (63) drückt, wobei
das Wandsegment (66) durch einen die Gewindebuchsenwand durchdringenden Schlitz (68) ausgebildet ist, wobei
der Schlitz (68) im Wesentlichen U-förmig ausgebildet ist, **dadurch gekennzeichnet, dass** die Stellschraube (63) mit einem Keilgetriebe zusammenwirkt.

2. Zerspanungswerkzeug (10) nach Anspruch 1, **dadurch gekennzeichnet, dass**
die Justiereinrichtung in den Grundkörper (12) integriert ist, und
die Stellschraube am Schneidwerkzeug (15) abgestützt ist.

3. Zerspanungswerkzeug (10) nach Anspruch 1, **dadurch gekennzeichnet, dass**
die Justiereinrichtung (17) in einen das Schneidwerkzeug (15) tragenden, am Grundkörper (12) axial- und/oder radial einstellbaren Schneidenträger (14) integriert ist, und
die Stellschraube (63) am Grundkörper (12) abgestützt ist.

4. Zerspanungswerkzeug (10) nach Anspruch 3, **dadurch gekennzeichnet, dass** die Stellschraube (63) in radialer Richtung an einer Steuerschräge (31) eines im Grundkörper (12) axial verschiebbar angeordneten Stellmittels (28) abgestützt ist.

5. Zerspanungswerkzeug (10) nach Anspruch 4, **dadurch gekennzeichnet, dass** die Stellschraube (63) über einen Druckstift (26) an der Steuerschräge (31) des Stellmittels (28) abgestützt ist.

6. Zerspanungswerkzeug (10) nach Anspruch 5, **dadurch gekennzeichnet, dass** der Schneidenträger (14) in der Art einer Wippe als ein am Grundkörper (12) schwenkbar gehaltener zweiarmiger Hebel ausgebildet ist.

7. Zerspanungswerkzeug (10) nach einem der Ansprüche 3 bis 6, **dadurch gekennzeichnet, dass** die Gewindebuchse (61) in einer Durchgangsbohrung (62) im Schneidenträger (14) angeordnet ist, die von der dem Grundkörper (12) abgewandten Seite her einen Betätigungszugriff auf die Stellschraube (63) gestattet.

8. Zerspanungswerkzeug (10) nach Anspruch 7, **dadurch gekennzeichnet, dass** die Gewindebuchse (61) in Axial- und/oder Umfangsrichtung der Durchgangsbohrung (62) form- und/oder kraftschlüssig festgelegt ist.

9. Zerspanungswerkzeug (10) nach einem der vorhergehenden Ansprüche, **dadurch gekennzeichnet, dass** sich das Wandsegment (66) in Axialrichtung der Gewindebuchse (61) erstreckt.

10. Zerspanungswerkzeug (10) nach einem der vorhergehenden Ansprüche, **dadurch gekennzeichnet, dass** die Gewindebuchse (61) an ihrem einen Ende einen einen Anschlag bildenden Flansch (71) aufweist.

11. Zerspanungswerkzeug (10) nach einem der vorhergehenden Ansprüche, **dadurch gekennzeichnet, dass** das Druckelement (64) aus einer Spannschraube gebildet ist.

12. Zerspanungswerkzeug (10) nach einem der vorhergehenden Ansprüche, **dadurch gekennzeichnet, dass** das Druckelement (64) im Wesentlichen radial gegen das Wandsegment (66) drückt.

## Claims

1. A cutting tool (10) with a base body (12) that extends along a longitudinal central axis or rotational axis (11) and a cutter (15) radially adjustably held on the base body (12), comprising:
an adjusting device (17) that acts between the base body (12) and the cutter (15), for finely adjusting an insert holder (14) adjustably held on the base body (12) of the cutting tool (10) relative to the base body (12), with an adjusting screw (3) that determines the position of the insert holder (14) in relation to the base body (12), comprising:
a threaded bush (61), with which the adjusting screw (63) is screwed, and which has an elastically deformable wall segment (66) transverse to the bush axis (70), and
a pressure element (64) arranged to the side of the threaded bush (61), which presses the wall segment (66) against the adjusting screw (63),
the wall segment (66) is formed by a slit (68) that penetrates through the bush wall, wherein
the slit (68) is essentially U-shaped in design, **characterized in that**
the adjusting screw (63) interacts with a wedge gear

2. The cutting tool (10) according to claim 1, **characterized in that**
the adjusting device is integrated into the base body (12), and
the adjusting screw is supported on the cutter (15).

3. The cutting tool (10) according to claim 1, **characterized in that**
the adjusting device (17) is integrated into an insert holder (14) that carries the cutter (15) and is axially and/or radially adjustable on the base body (12), and
the adjusting screw (63) is supported on the base body (12).

4. The cutting tool (10) according to claim 3, **characterized in that** the adjusting screw (63) is supported in an axial direction on a control slant (31) of an adjusting means (28) that is axially adjustably arranged in the base body (12).

5. The cutting tool (10) according to claim 4, **characterized in that** the adjusting screw (63) is supported on the control slant (31) of the adjusting means (28) via a pressure pin (26).

6. The cutting tool (10) according to claim 5, **characterized in that** the insert holder (14) is designed as a two-armed lever pivotably held on the base body (12) like a rocker.

7. The cutting tool (10) according to one of claims 3 to 6, **characterized in that** the threaded bush (61) is arranged in a through hole (62) in the insert holder (14), which allows access for actuating the adjusting screw (63) from the side facing away from the base body (12).

8. The cutting tool (10) according to claim 7, **characterized in that** the threaded bush (61) is positively and/or non-positively fixed in an axial and/or peripheral direction of the through hole (62).

9. The cutting tool (10) according to one of the preceding claims, **characterized in that** the wall segment (66) extends in an axial direction of the threaded bush (61).

10. The cutting tool (10) according to one of the preceding claims, **characterized in that** one end of the threaded bush (61) has a flange (71) that forms a stop.

11. The cutting tool (10) according to one of the preceding claims, **characterized in that** the pressure element (64) consists of a clamping screw.

12. The cutting tool (10) according to one of the preceding claims, **characterized in that** the pressure element (64) presses essentially radially against the wall segment (66).

## Revendications

1. Outil d'usinage par enlèvement de copeaux (10) avec un corps de base (12) s'étendant le long d'un axe central longitudinal ou axe de rotation (11) et un outil de découpe (15) maintenu radialement sur le corps de base (12) de manière réglable, comprenant :
un dispositif d'ajustement (17) agissant entre le corps de base (12) et l'outil de découpe (15) pour l'ajustement fin d'un porte-lame (14) maintenu de manière réglable sur le corps de base (12) de l'outil d'usinage par enlèvement de copeaux (10) par rapport au corps de base (12), avec une vis de réglage (63) déterminant la position du porte-lame (14) par rapport au corps de base (12), présentant :
une douille filetée (61), avec laquelle la vis de réglage (63) est vissée et qui présente un segment de paroi (66) élastiquement déformable transversalement à l'axe de douille (70), et
un élément de pression (64) disposé sur le côté de la douille filetée (61), élément qui appuyé le segment de paroi (66) contre la vis de réglage (63), dans lequel
le segment de paroi (66) est réalisé par le biais d'une fente (68) traversant la paroi de douille filetée, dans lequel
la fente (68) est réalisée sensiblement en forme de U, **caractérisé en ce que** la vis de réglage (63) coopère avec un entraînement à clavette.

2. Outil d'usinage par enlèvement de copeaux (10) selon la revendication 1, **caractérisé en ce que** le dispositif d'ajustement est intégré dans le corps de base (12) et **en ce que** la vis de réglage est soutenue par l'outil de découpe (15).

3. Outil d'usinage par enlèvement de copeaux (10) selon la revendication 1, **caractérisé en ce que**
le dispositif d'ajustement (17) est intégré dans un porte-lame (14) portant l'outil de découpe (15) et réglable axialement et/ou radialement sur le corps de base (12), et
la vis de réglage (63) est soutenue par le corps de base (12).

4. Outil d'usinage par enlèvement de copeaux (10) selon la revendication 3, **caractérisé en ce que** la vis de réglage (63) est soutenue en direction radiale sur un chanfrein de commande (31) d'un moyen de réglage (28) disposé de manière déplaçable axialement dans le corps de base (12).

5. Outil d'usinage par enlèvement de copeaux (10) selon la revendication 4, **caractérisé en ce que** la vis de réglage (63) est soutenue par le chanfrein de commande (31) du moyen de réglage (28) par l'intermédiaire d'une tige de pression (26).

6. Outil d'usinage par enlèvement de copeaux (10) selon la revendication 5, **caractérisé en ce que** le porte-lame (14) est réalisé à la manière d'un interrupteur à bascule comme un levier à deux bras maintenu de manière pivotante sur le corps de base (12).

7. Outil d'usinage par enlèvement de copeaux (10) selon l'une quelconque des revendications 3 à 6, **caractérisé en ce que** la douille filetée (61) est disposée dans un alésage traversant (62) du porte-lame (14), alésage qui permet un accès d'actionnement à la vis de réglage (63) depuis le côté opposé au corps de base (12).

8. Outil d'usinage par enlèvement de copeaux (10) selon la revendication 7, **caractérisé en ce que** la douille filetée (61) est fixée par complémentarité de forme et/ou à force en direction axiale et/ou circonférentielle de l'alésage traversant (62).

9. Outil d'usinage par enlèvement de copeaux (10) selon l'une quelconque des revendications précédentes, **caractérisé en ce que** le segment de paroi (66) s'étend en direction axiale de la douille filetée (61).

10. Outil d'usinage par enlèvement de copeaux (10) selon l'une quelconque des revendications précédentes, **caractérisé en ce que** la douille filetée (61) présente à l'une de ses extrémités une bride (71) formant une butée.

11. Outil d'usinage par enlèvement de copeaux (10) selon l'une quelconque des revendications précédentes, **caractérisé en ce que** l'élément de pression (64) est formé par une vis de serrage.

12. Outil d'usinage par enlèvement de copeaux (10) selon l'une quelconque des revendications précédentes, **caractérisé en ce que** l'élément de pression (64) appuie sensiblement radialement contre le segment de paroi (66).
